**Europäisches Patentamt**

**European Patent Office**

**Office européen des brevets**

(19)

(11) Veröffentlichungsnummer: **0 128 624**
**A2**

(12) # EUROPÄISCHE PATENTANMELDUNG

(21) Anmeldenummer: **84200816.1**

(22) Anmeldetag: **08.06.84**

(51) Int. Cl.³: **H 04 L 7/04,** H 04 L 1/10

(30) Priorität: **10.06.83 DE 3320948**

(43) Veröffentlichungstag der Anmeldung: **19.12.84**
**Patentblatt 84/51**

(84) Benannte Vertragsstaaten: **AT BE CH DE FR GB IT LI SE**

(71) Anmelder: **Philips Patentverwaltung GmbH,**
**Billstrasse 80, D-2000 Hamburg 28 (DE)**

(84) Benannte Vertragsstaaten: **DE**

(71) Anmelder: **N.V. Philips' Gloeilampenfabrieken,**
**Groenewoudseweg 1, NL-5621 BA Eindhoven (NL)**

(84) Benannte Vertragsstaaten: **BE CH FR GB IT LI SE AT**

(72) Erfinder: **Kittel, Ludwig, Dr., Eichenstrasse 37,**
**D-8501 Heroldsberg (DE)**

(74) Vertreter: **Peuckert, Hermann et al, Philips**
**Patentverwaltung GmbH**
**Billstrasse 80 Postfach 10 51 49,**
**D-2000 Hamburg 28 (DE)**

(54) Verfahren und Schaltungsanordnung zur Synchronisation in einem Datenübertragungssystem.

(57) In einem Datenübertragungssystem können Daten, insbesondere Meldungen, in Form von aneinander gereihten modifizierten Codewörtern einem linearen Blockcode übertragen werden. Die modifizierten Codewörter entstehen durch die Verknüpfung der aus den Daten gebildeten Codewörtern mit einem Schutzwort.

Bei bitweiser Verschachtelung von modifizierten Codewörtern können nach Entschachtelung auf der Empfangsseite vertauschungen in der Reihenfolge der Codewörter einer Meldung durch Bitverschiebung auftreten. Um die Erkennung einer Fehlsynchronisation zu ermöglichen, wird jedes Codewort mit einem seiner Position innerhalb der Meldung kennzeichnenden Schutzwort verknüpft. Die so entstehenden modifizierten Codewörter werden bitweise verschachtelt, übertragen und wieder entschachtelt und jedes so entstehende Wort wird auf der Empfangsseite mit einem seiner Position innerhalb der Meldung kennzeichnenden Prüfwort verknüpft. Die Schutzwörter und Prüfwörter werden dabei so gewählt, dass die durch deren Verknüpfung gebildeten Schlüsselwörter vorzugsweise in Nebenklassen liegen, welche nicht für die Decodierung verwendet werden.

0128624

Philips Patentverwaltung GmbH      PHD 83308 EP
N.V. Philips' Gloeilampenfabrieken     28.05.1984

<u>Verfahren und Schaltungsanordnung zur Synchronisation</u>
<u>in einem Datenübertragungssystem</u>

Die Erfindung betrifft ein Verfahren und eine Schaltungsanordnung zur Synchronisation in einem Datenübertragungssystem gemäß den Oberbegriffen der Patentansprüche 1
und 6.

In einem Datenübertragungssystem mit Datensinken und
Datenquellen können zwischen diesen über Übertragungskanäle Meldungen ausgetauscht werden. Diese Meldungen
können eine Wortstruktur aufweisen und beispielsweise
aus aneinandergereihten Codewörtern eines linearen
Blockcodes bestehen. Ein Blockcode ist ein Code mit
gleich langen Codewörtern, bei dem eine Folge von zu
codierenden  Symbolen (Daten) oder Wörtern einer
Quelle in gleichlange Blöcke unterteilt werden. Den
Symbolen oder Wörtern der Datenquelle wird jeweils ein Codewort
zugeordnet. Bei einem linearen Blockcode ergibt jede
Linearkombination von Codewörtern wieder ein Codewort.

Werden Codewörter aneinandergereiht und in kontinuierlicher Folge über den Übertragungskanal übertragen,
so muß empfangsseitig eine Unterteilung der Folge
in Codewörter, d.h. eine Wortsynchronisation, vorgenommen werden. Bei Verlust der Wortsynchronisation
werden einem Decoder Kombinationen aus Codeelementen
zugeführt, welche aus  zwei aufeinanderfolgenden Codewörtern stammen. Eine Decodierung ist dann nicht möglich, wenn kein Codewort aus dem Codewortvorrat zugewiesen werden kann.

In "Fehlerkorrigierende Block-Codierung für die Datenübertragung" von F.J. Furrer, Birkhäuser Verlag, 1981 Seiten 238 bis 250 sind Verfahren zur Wortsynchronisation bei hintereinander übertragenen Codewörtern bei Verwendung von Synchronisationsmustern, von Codes mit binären Vorsilben, von trennbaren Codes und von synchronisierbaren Codes erläutert. Die Wahl des Synchronisationsverfahrens hängt, wie die Wahl des Codierverfahrens, von den Eigenschaften des Übertragungskanals ab. Zur Synchronisation kann ein Synchronisationsmuster verwendet werden, welches eine Bitfolge vorgegebener Länge und ein festes, im Empfänger bekanntes Muster ist (z.B. ISO 3309-1979). Die Einfügung eines Synchronisationsmusters am Anfang der Meldung oder die Wiederholung in bestimmten Abständen innerhalb der Meldung erniedrigen die Nutz-Datenrate eines Daten-Übertragungskanals.

Ein weiteres Verfahren zur Wortsynchronisation ist aus "Error-Correcting Codes" von Peterson/Weldon, 2. Auflage 1972, insbesondere Seiten 374 bis 390 bekannt. Bei diesem Verfahren werden alle hintereinander gesendeten Codewörtern mit ein und demselben Schutzwort verknüpft, wobei eine bitweise Verschiebung der Codewörter einer Meldung erkannt werden kann. Das Schutzwort, welches kein Codewort ist, wird sendeseitig addiert und empfangsseitig subtrahiert. Beispielsweise ist auf Seite 379 angegeben, daß das Schutzwort für einen Binärcode gleich "1" gewählt wird, wodurch jeweils das letzte Bit der Codewörter invertiert wird. Findet eine Verschiebung der Codewörter um eine oder mehrere Bitstellen statt, so kann auf der Empfangsseite, infolge der Verletzung der Codiervorschrift, diese Bitverschiebung erkannt und gegebenenfalls korrigiert werden.

Um Codes, die zufällig auftretende Fehler erkennen oder korrigieren, auf störanfälligen Übertragungskanälen mit Bündelfehlern verwenden zu können, z.B. Funkübertragungskanäle in einem Funkübertragungssystem, werden vor der Übertragung die einzelnen Codewörter miteinander bitweise verschachtelt. Zur bitweisen Verschachtelung werden hintereinander jeweils das erste Bit der Codewörter, dann das zweite Bit der Codewörter und so weiter bis zum letzten Bit der Codewörter der Meldung gefügt (B. Dorsch, "Performance and Limits of Coding for Simple Time Varying Channels",1980, International Zurich Seminar on Digital Communications, Proceedings, IEEE Catalog Nr. 80 CH 1521-4, linke Spalte von Seite G 1.1). Die Erfindung geht von der Beobachtung aus, daß eine Fehlsynchronisation bei bitweise verschachtelten Codewörtern sich in einer Vertauschung in der Reihenfolge der entschachtelten Codewörter am Empfänger auswirkt.

Der Erfindung liegt die Aufgabe zugrunde, ein Verfahren und Schaltungsanordnung zur Wortsynchronisation anzugeben, womit Vertauschungen in der Reihenfolge von Codewörtern einer Meldung erkannt werden können.

Diese Aufgabe wird bei einem Verfahren zur Wortsynchronisation der eingangs genannten Art, welches aus Peterson/Weldon bekannt ist, durch den kennzeichnenden Teil des Patentanspruchs 1 gelöst.

Werden Codewörter eines linearen Blockcodes bitweise verschachtelt und über einen gestörten Übertragungs-

0128624

-4-

kanal übertragen, so kann eine Vertauschung gegenüber der ursprünglichen Reihenfolge der Codewörter einer Meldung auftreten. Durch die Verknüpfung von Codewörtern bzw. Wörtern mit ihre Position innerhalb der Meldung kennzeichnenden Schutzwörtern bzw. Prüfwörtern kann eine Vertauschung in der Reihenfolge zuverlässig erkannt werden. Unter der Berücksichtigung der vorgegebenen Codiervorschrift ist die Auswahl der Schutzwörter bzw. der Prüfwörter einfach zu treffen. Bei der Übertragung von Codewörtern über einen gestörten Übertragungskanal kann zufällig in einem Codewort ein Fehlerbündel auftreten. Durch die bitweise Verschachtelung der Codewörter wird das Fehlerbündel auf verschiedene Codewörter verteilt. Die Wortfehlerwahrscheinlichkeit und die Restfehlerwahrscheinlichkeit sind im Vergleich zur blockweisen Übertragung von Codewörtern geringer.

In den Unteransprüchen sind bevorzugte Ausgestaltungen der Erfindung angegeben.

Wird ein linearer, systematischer Code verwendet, so kann die Länge der Schutz- bzw. Prüfwörter auf die Prüfteile der Codewörter bzw. Wörter beschränkt bleiben. Dadurch kann auf einfache Art und Weise der Schaltungsaufwand auf der Empfangs- und Sendeseite zur Realisierung des Verfahrens verringert werden.

Die Prüfwörter und Schutzwörter sind empfangs- und sendeseitig gespeichert. Der Speicheraufwand kann bei Duplex-Übertragungssystemen auf die Hälfte verringert werden, wenn die Schutzwörter gleich den Prüfwörtern gewählt werden. Eine Verringerung des Speicheraufwands kann erreicht werden, wenn die Schutz- und Prüfwörter als Codewörter eines linearen Codes gewählt werden, wobei beispielsweise die Generatormatrix gespeichert wird.

Die Verknüpfung von Codewörtern mit Schutzwörtern bzw. von Wörtern mit Prüfwörtern durch bitweise mod-2-Addition ist einfach durchzuführen und besitzt den Vorteil eines geringen Schaltungsaufwands.

Die Erfindung wird nachfolgend anhand eines Ausführungsbeispiels näher beschrieben und erläutert. Es zeigt:

Fig. 1 ein Blockschaltbild eines Datenübertragungssystems,

Fig. 2 eine durch Fehlsynchronisation verfälschte Meldung,

Fig. 3 die Vertauschung von Codewörtern in Abhängigkeit von einer Verschiebung um f Bitstellen,

Fig. 4 in Tabellenform für einen bestimmten Code ausgewählte Schutz- bzw. Prüfwörter und

Fig. 5 in Tabellenform für diesen Code alle bei Fehlsynchronisation, aufgrund der Verknüpfung der Schutzwörter mit den Prüfwörtern, entstehenden Schlüsselwörter.

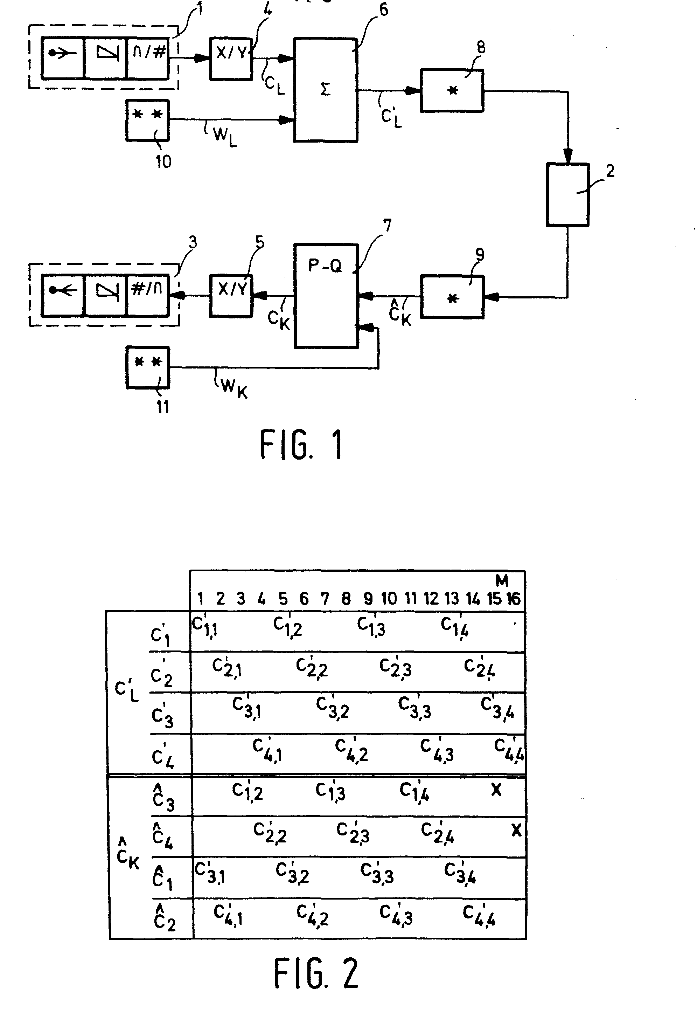

In einem Datenübertragungssystem gemäß Fig. 1 ist eine Datenquelle 1 über einen Übertragungskanal 2 mit einer Datensinke 3 verbunden. Auf der Sendeseite sind ein Codierer 4, eine Additionsschaltung 6 und eine erste Einrichtung 8 zur bitweisen Verschachtelung von modifizierten Codewörtern $c'_L$ angeordnet. Auf der Empfangsseite sind eine zweite Einrichtung 9 zur Entschachtelung der über den Übertragungskanal 2 übertragenen modifizierten Codewörter $c'_L$, eine Subtraktionsschaltung 7 und ein Decodierer 5 vorgesehen. Den Symbolen (Daten) bzw. Wörtern der Datenquelle 1 werden nach einer Codiervorschrift Codewörter $c_L$ zugeordnet. In der Additionsschaltung 6 wird mit jedem Codewort $c_L$ ein seine Position innerhalb einer Meldung M kennzeichnendes Schutzwort $w_L$ verknüpft. Die Schutzwörter $w_L$ sind in einem Speicher 10 gespeichert. Die so gebildeten modifizierten Codewörter $c'_L$ werden bitweise verschachtelt, übertragen und empfangsseitig wieder entschachtelt. Nach der Entschachtelung wird ein auf der Empfangsseite auftretendes Wort $\hat{c}_K$ in der Subtraktionsschaltung 7 mit einem seine Position innerhalb der Meldung M kennzeichnenden Prüfwort $w_K$ verknüpft. Die Prüfwörter $w_K$ sind in einem Speicher 11 abgespeicht.

Sind Datenquelle 1 und Datensinke 3 miteinander synchronisiert, so ist das Codewort $c_K$ am Ausgang der Subtraktionsschaltung 7 gleich dem Codewort $c_L$ auf der Sendeseite. Das Codewort $c_K$ wird im Decodierer 5 in ein Wort bzw. in Daten umgesetzt und zur Meldungsauswertung der Datensinke 3 zugeführt. Eine vorgetäuschte Blocksynchronisation kann in der Datensinke 3 zu einer falschen Meldungsauswertung führen.

Bei einem Funkübertragungssystem werden als Meldungen M beispielsweise Funkteilnehmernummern über einen Übertragungskanal 2 zwischen einer mobilen Teilnehmerstation (Datenquelle 1 ) und einer ortsfesten Funkstation (Datensinke 3) übertragen. In der Richtung von mobiler Teilnehmerstation 1 zur ortsfesten Funkstation 3 umfaßt die Meldung M z.B. zehn Codewörter und in umgekehrter Richtung acht Codewörter. Eine falsche Meldungsauswertung kann beispielsweise dazu führen, daß Gesprächsgebühren falsch belastet werden.

In Fig. 2 ist in Tabellenform die bitweise Verschachtelung der modifizierten Codewörter $c'_L$ und die bitweise Entschachtelung der Wörter $\hat{c}_K$ dargestellt. Bei Fehlsynchronisation, z.B. bei einer Verschiebung der modifizierten Codewörter $c'_L$ in der Bitstelle um zwei, tritt eine Vertauschung auf. Die Tabelle zeigt eine Meldung M bestehend aus sechzehn Codeelementen, welchen vier Codewörter ($c'_L$, $\hat{c}_K$) mit einer Stellenzahl gleich vier zugeordnet sind. Im Kopf der Tabelle sind die sechzehn Stellen der Bitfolge der gesendeten und empfangenen Meldung M angegeben. In der Spalte auf der linken Seite der Tabelle sind die modifizierten Codewörter $c'_L$ sowie die Wörter $\hat{c}_K$ entsprechend ihrer Reihenfolge in der Meldung M angeordnet. Durch die Fehlsynchronisation um zwei Bitstellen wird die Reihenfolge der gesendeten Wörter ($c'_1$, $c'_2$, $c'_3$, $c'_4$) vertauscht, d.h. die Codewörter $\hat{c}_K$ werden in einer anderen Reihenfolge ($c'_3$, $c'_4$, $c'_1$, $c'_2$) empfangen. Durch die Indizierung der Codeelemente innerhalb der Tabelle, z.B. $c'_{2,4}$, soll verdeutlicht werden, daß es sich bei diesem Codeelement um das an der vierten Stelle des zweiten modifizierten Codeworts $c'_L$ angeordneten Codeelements handelt. Die Kreuze an der fünfzehnten und sechzehnten Bitstelle innerhalb der empfangenen Meldung M geben an, daß es sich bei diesen Codeelementen um solche Codeelemente handelt, die nicht zu Codeelementen der gesendeten Meldung M gehören. Eine Verschiebung um zwei Bitstellen ruft eine Vertauschung der Wörter $\hat{c}_K$ in
ihrer Reihenfolge um zwei hervor.

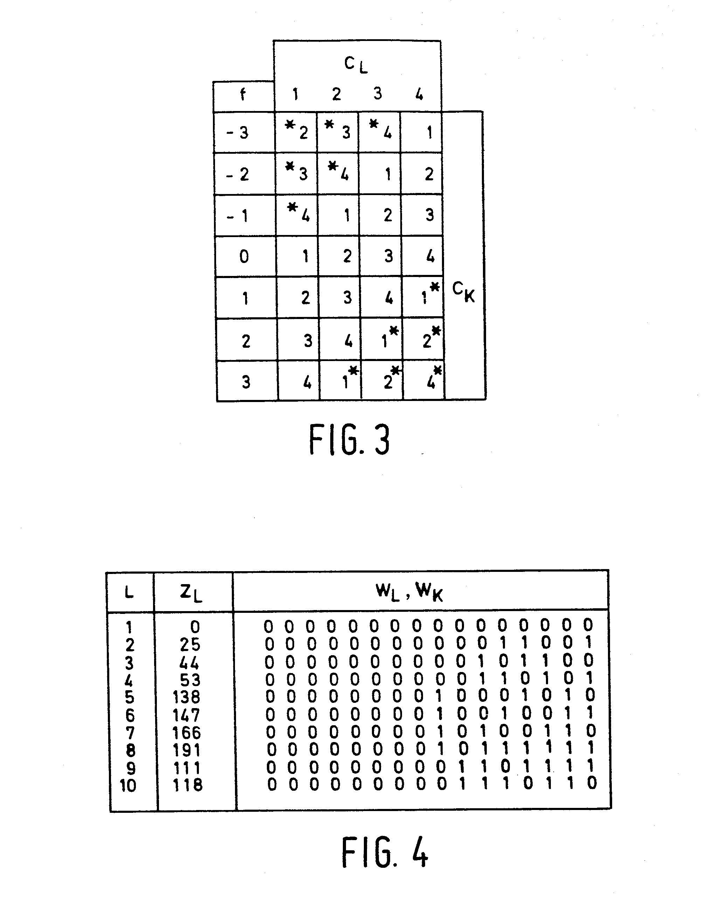

In Fig. 3 ist die Folge der empfangenen Wörter $c_K$
in Abhängigkeit zu einer Verschiebung um f Bitstellen
dargestellt. Die Meldung M soll vier Codewörter $c_L$
bzw. vier Wörter $c_K$ umfassen. In der Tabelle ist
in der linken Spalte die Verschiebung um bis zu
drei Bitstellen dargestellt, wobei durch das Vorzeichen die Verschieberichtung angegeben ist. Im
Fall eines negativen Vorzeichens wird das Wort $c_K$
im Vergleich zur gesendeten Reihenfolge der Codewörter $c_L$ (bzw. modifizierten Codewörter $c'_L$) zu
spät bzw. durch das positive Vorzeichen angedeutet
zu früh empfangen.

Durch die Fehlsynchronisation werden die empfangenen
Wörter $c_K$ zyklisch gegenüber den gesendeten Codewörtern $c_L$ vertauscht und es treten in den letzten
f bzw. ersten f Wörtern $c_K$ zusätzlich Verschiebungen
auf. In der Tabelle der Fig. 3 sind Wörter $c_K$, in
denen diese zusätzliche Verschiebung auftritt, durch
ein an der Zahl hochgesetztes Sternzeichen angegeben.

Die Wahrscheinlichkeit, daß durch Fehlsynchronisation
eine Meldung M falsch ausgewertet wird, ist vor
allem bei einer Verschiebung um wenige Bitstellen
sehr hoch. Bei einem linearen Code kann durch die
Bitverschiebung in jedem der Wörter $c_K$ ein
Binärmuster entstehen, welches ein Codewort aus dem
Codewortvorrat des Codes ist.

Zur Erkennung von Fehlsynchronisation wird, gemäß
der Erfindung, die Reihenfolge der zu sendenden
Codewörter $c_L$ gekennzeichnet. Jedes Codewort $c_L$ wird
nach der Verknüpfungsvorschrift

$$c'_L = c_L \oplus w_L$$

mit dem Schutzwort $w_L$ verknüpft, wobei als Verknüpfungsvorschrift vorzugsweise eine bitweise
mod-2-Addition verwendet wird.

Nach bitweiser Verschachtelung, Übertragung und
Entschachtelung wird mit dem empfangenen Wort
$\hat{c}_K$, gemäß der Verknüpfungsvorschrift

$$c_K = \hat{c}_K \oplus w_K$$

vorzugsweise durch mod-2-Addition, das Prüfwort $w_K$
verknüpft. Auf der Empfangsseite entsteht ein
Schlüsselwort $w_{KL}$, welches gemäß der Verknüpfungsvorschrift

$$w_{KL} = w_K \oplus w_L$$

gebildet wird.

Ist die Datensinke 3 (Empfänger) synchronisiert,
so stimmt die Reihenfolge der gesendeten, modifizierten Codewörter $c'_L$ mit der Reihenfolge der
empfangenen Wörter $\hat{c}_K$ überein, d.h. K = L. Die
auf der Sendeseite durch die Addition der Schutzwörter $w_L$ verursachte Codeverletzung wird dann
auf der Empfangsseite durch die nochmalige Addition
des Prüfworts $w_K$ aufgehoben.

Um eine sichere Erkennung der Fehlsynchronisation bei einem linearen Blockcode mit e-Fehler-
Korrektur zu erhalten, müssen die Schutz- bzw.
Prüfwörter $w_L$ bzw. $w_K$ so gewählt werden, daß die Schlüsselwörter $w_{KL}$ in einer Nebenklasse liegen, welche nicht für die Decodierung verwendet wird. Die Nebenklasse kann beispielsweise durch Bildung des Syndroms festgestellt werden.

Für einen linearen, systematischen (16, 8, 5) Blockcode mit dem Generatorpolynom $g(x) = x^8+x^7+x^6+x^4+x^2+x+1$, der bis zu zwei Fehler korrigieren kann, sind in Fig. 4 für eine Meldung M mit zehn Codewörtern die ausgewählten Schutzwörter $w_L$ (gleich den Prüfwörtern $w_K$) angegeben. In den linken Spalten der Tabelle sind die Dezimaldarstellung $z_L$ der Bitmuster der zugehörigen Schutzwörter $w_L$ (Prüfwörter $w_K$) und die Position angegeben.

Diese Bitmuster werden dabei so gewählt, daß bei der Verknüpfung der Schutzwörter $w_L$ bzw. Prüfwörter $w_K$ ein Schlüsselwort $w_{KL}$ entsteht, welches eine höhere Hammingdistanz aufweist als die Zahl e der je Codewort korrigierten Fehler. Die Bitmuster von Schutzwort $w_L$ bzw. Prüfwort $w_K$ sind so zu wählen, daß das enstehende Schlüsselwort $w_{KL}$ für $K \neq L$ kein Codewort aus dem Codewortvorrat ist. Es kann gezeigt werden, daß die gesuchten Bitmuster Elemente aus unterschiedlichen Nebenklassen $N_t$ sein müssen. Es ist das Ziel, die gesuchten Bitmuster so zu wählen, daß die entstehenden Schlüsselwörter $w_{KL}$ für $K \neq L$ in Nebenklassen liegen, die nicht zur Decodierung herangezogen werden.

Im Falle einer Fehlsynchronisation stimmen die Bitmuster von $w_L$ und $w_K$ nicht überein. Zusätzlich zu der sendeseitigen, durch die Addition des Bitmusters von Schutzwort $w_L$ verursachten Codeverletzung kommen weitere Codeverletzungen, durch
die empfangsseitige Addition des Bitmusters von
Prüfwort $w_K$, hinzu. Die Summe der so verfälschten
Binärstellen (Codeelemente) im Wort $c_K$ ist größer
als die Anzahl e korrigierbarer Fehler.

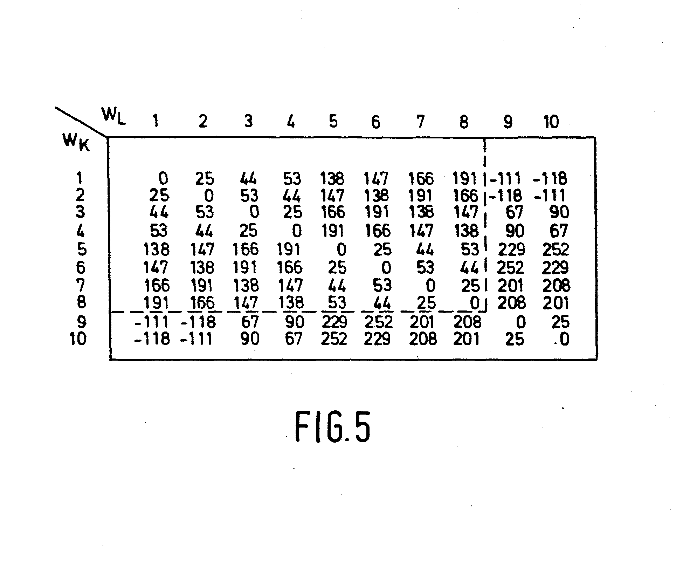

In Fig. 5 ist für den linearen, systematischen
(16,8,5) . Blockcode mit 2-Fehler-Korrektur (e = 2)
die Matrix von Schlüsselwörtern $w_{KL}$ angegeben,
welche sich durch die Verknüpfung der Bitmuster
von Schutzwörtern $w_K$ bzw. Prüfwörtern $w_L$ nach
Fig. 4 ergibt. Aus den angegebenen Nebenklassenbedingungen kann als Bitmuster ein Quadrupel (25,
44, 138, 201) bestimmt werden, welches einen Unterraum mit sechzehn Bitmustern aufspannt. Aus diesen
sechzehn Bitmustern werden zehn ausgewählt, welche
in der Tabelle nach Fig. 4 angegeben sind. In der
Tabelle nach Fig. 5 sind alle möglichen Verknüpfungen
dieser zehn Bitmuster angegeben.

Die bei der Verknüpfung entstehenden Schlüsselwörter $w_{KL}$ mit der Dezimaldarstellung 111 und 118
sind Elemente einer Nebenklasse $N_t$ für einen Code
mit Minimalabstand gleich zwei. Beispielsweise
wird aufgrund der Fehlsynchronisation das Schlüsselwort $w_{KL}$ mit der Dezimalzahl 25, mit einem Prüfwort $w_L$ mit der Dezimalzahl 111 verknüpft. Das,
aufgrund einer Bitverschiebung von sieben Stellen
entstehende Schlüsselwort $w_{KL}$ mit der Dezimalzahl 118
(Codewort) enthält zwei Fehler und ist somit fehlerkorrigierbar. Schlüsselwörter $w_{KL}$ solcher Nebenklassen $N_t$ sind in Fig. 5 mit einem Minuszeichen

0128624

-12-

versehen. Derartige Schlüsselwörter $w_{KL}$ treten nur bei einer Verschiebung um größer gleich sieben Bitstellen auf, wobei die Wahrscheinlichkeit einer solchen Verschiebung sehr gering ist.

Durch das erfindungsgemäße Verfahren kann somit die Wahrscheinlichkeit nicht erkannter Fehlsynchronisation verringert werden. Damit kann eine durch Fehlsynchronisation verursachte Verfälschung von Nachrichten (Meldungen M auf höherer Protokollebene) vermieden werden.

0128624

-13-

Philips Patentverwaltung GmbH          PHD 83308 EP
N.V. Philips'Gloeilampenfabrieken    28.05.1984

Patentansprüche

1. Verfahren zur Synchronisation einer Datensinke auf eine Datenquelle eines Datenübertragungssystems, wobei über einen Übertragungskanal zwischen Datenquelle und Datensinke Meldungen, bestehend aus aneinander gereihten, modifizierten Codewörtern eines linearen Blockcodes, welche durch Verknüpfung von Codewort mit Schutzwort gebildet werden, übertragen werden, dadurch gekennzeichnet, daß das Schutzwort ($w_L$) die Position des Codeworts ($c_L$) innerhalb der Meldung (M) kennzeichnet, daß die so modifizierten Codewörter ($c'_L$) bitweise verschachtelt, übertragen und wieder entschachtelt werden und daß nach Entschachtelung jedes Wort ($\hat{c}_K$) mit einem seine Position innerhalb der Meldung (M) kennzeichnenden Prüfwort ($w_K$) verknüpft wird.

2. Verfahren nach Anspruch 1, dadurch gekennzeichnet, daß Prüfteile von Codewörtern ($c_L$) eines linearen, systematischen Codes mit Schutzwörtern ($w_L$) bzw. Empfangswörtern ($\hat{c}_K$) mit Prüfwörtern ($w_K$), welche die Position innerhalb der Meldung (M) kennzeichnen und gleiche Wortlängen wie die Prüfteile der Codewörter ($c_L$) oder Wörter ($c'_K$) aufweisen, verknüpft werden.

3. Verfahren nach Anspruch 1 und 2, dadurch gekennzeichnet, daß die Verknüpfung von Codewort ($c_L$) mit Schutzwort ($w_L$) und Wort ($\hat{c}_K$) mit Prüfwort ($w_K$) durch bitweise mod-2-Addition erfolgt.

4. Verfahren nach Anspruch 1 und 2, dadurch gekennzeichnet, daß die verschiedenen Prüfwörter $(w_K)$ gleich den Schutzwörtern $(w_L)$ sind und so gewählt werden, daß durch Verknüpfung von Schutzwörtern $(w_L)$ mit Prüfwörtern $(w_K)$ gebildete Schlüsselwörter $(w_{KL})$ vorzugsweise in Nebenklassen liegen, welche nicht für die Decodierung verwendet werden.

5. Verfahren nach Anspruch 4, dadurch gekennzeichnet, daß die verschiedenen Schutzwörter $(w_L)$ und Prüfwörter $(w_K)$ als Codewörter eines linearen Codes gewählt werden.

6. Schaltungsanordnung zur Synchronisation einer Datensinke (3) auf eine Datenquelle (1) eines Datenübertragungssystems mit einem Übertragungskanal (2) über den Meldungen (M) bestehend aus aneinander gereihten modifizierten Codewörtern $(c'_L)$ eines linearen Blockcodes übertragen werden, welche durch Verknüpfung von am Ausgang eines Codierers (4) verbunden mit der Datenquelle (1) auftretenden Codewort $(c_L)$ mit Schutzwort $(w_L)$ mittels einer Additionsschaltung (6) angeordnet am Ort der Datenquelle (1) gebildet werden, dadurch gekennzeichnet, daß in einem am Ort der Datenquelle (1) angeordneten Speicher (10) eine Vielzahl von Schutzwörtern $(w_L)$ gespeichert sind, welche die Position des Codeworts $(c_L)$ innerhalb der Meldung (M) kennzeichnen, daß am Ort der Datenquelle (1) eine erste Einrichtung (8) angeordnet ist, welche mit der Additionsschaltung (6) und dem Übertra-

-15-

gungskanal (2) verbunden ist und welche die modifizierten Codewörter ($c'_L$) bitweise verschachtelt und dem Übertragungskanal (2) zuführt, daß mittels einer am Ort der Datensinke (3) angeordneten zweiten Einrichtung (9), welche mit dem Übertragungskanal (2) verbunden ist, die empfangenen modifizierten Codeworte ($c'_L$) wieder entschachtelt werden, daß in einem am Ort der Datensinke (3) angeordneten Speicher (11) eine Vielzahl von Prüfwörtern ($w_K$) gespeichert sind, welche die Position jedes am Ausgang der zweiten Einrichtung (9) auftretenden Worts ($\hat{c}_K$) innerhalb der Meldung (M) kennzeichnen und daß am Ort der Datensinke (3) eine Subtraktionsschaltung (7) angeordnet ist, welche mit der zweiten Einrichtung (9) und mit dem Speicher (11) verbunden ist und welche die zugeführten Wörter ($\hat{c}_K$) und Prüfwörter ($w_K$) miteinander verknüpft und die am Ausgang auftretenden Codewörter ($c_K$) einem Decodierer (5) zuführt, welcher mit der Datensinke (3) verbunden ist, wobei Datenquelle (1) und Datensinke (3) miteinander synchronisiert sind, wenn das Codewort ($c_K$) am Ausgang der Subtraktionsschaltung (7) gleich dem Codewort ($c_L$) am Ausgang des Codierers (4) ist.

0128624

FIG. 1

FIG. 2

1 — III — PHD 83-308

|  | $c_L$ | | | |  |
|---|---|---|---|---|---|
| f | 1 | 2 | 3 | 4 |  |
| -3 | *2 | *3 | *4 | 1 |  |
| -2 | *3 | *4 | 1 | 2 |  |
| -1 | *4 | 1 | 2 | 3 |  |
| 0 | 1 | 2 | 3 | 4 |  |
| 1 | 2 | 3 | 4 | 1* | $c_K$ |
| 2 | 3 | 4 | 1* | 2* |  |
| 3 | 4 | 1* | 2* | 4* |  |

## FIG. 3

| L | $z_L$ | $w_L , w_K$ |
|---|---|---|
| 1 | 0 | 0 0 0 0 0 0 0 0 0 0 0 0 0 0 0 |
| 2 | 25 | 0 0 0 0 0 0 0 0 0 0 1 1 0 0 1 |
| 3 | 44 | 0 0 0 0 0 0 0 0 1 0 1 1 0 0 |
| 4 | 53 | 0 0 0 0 0 0 0 0 1 1 0 1 0 1 |
| 5 | 138 | 0 0 0 0 0 0 1 0 0 0 1 0 1 0 |
| 6 | 147 | 0 0 0 0 0 0 1 0 0 1 0 0 1 1 |
| 7 | 166 | 0 0 0 0 0 0 1 0 1 0 0 1 1 0 |
| 8 | 191 | 0 0 0 0 0 0 1 0 1 1 1 1 1 1 |
| 9 | 111 | 0 0 0 0 0 0 0 1 1 0 1 1 1 1 |
| 10 | 118 | 0 0 0 0 0 0 0 1 1 1 0 1 1 0 |

## FIG. 4

0128624

| $W_K$ \ $W_L$ | 1 | 2 | 3 | 4 | 5 | 6 | 7 | 8 | 9 | 10 |
|---|---|---|---|---|---|---|---|---|---|---|
| 1 | 0 | 25 | 44 | 53 | 138 | 147 | 166 | 191 | -111 | -118 |
| 2 | 25 | 0 | 53 | 44 | 147 | 138 | 191 | 166 | -118 | -111 |
| 3 | 44 | 53 | 0 | 25 | 166 | 191 | 138 | 147 | 67 | 90 |
| 4 | 53 | 44 | 25 | 0 | 191 | 166 | 147 | 138 | 90 | 67 |
| 5 | 138 | 147 | 166 | 191 | 0 | 25 | 44 | 53 | 229 | 252 |
| 6 | 147 | 138 | 191 | 166 | 25 | 0 | 53 | 44 | 252 | 229 |
| 7 | 166 | 191 | 138 | 147 | 44 | 53 | 0 | 25 | 201 | 208 |
| 8 | 191 | 166 | 147 | 138 | 53 | 44 | 25 | 0 | 208 | 201 |
| 9 | -111 | -118 | 67 | 90 | 229 | 252 | 201 | 208 | 0 | 25 |
| 10 | -118 | -111 | 90 | 67 | 252 | 229 | 208 | 201 | 25 | 0 |

FIG.5